# EUROPÄISCHE PATENTSCHRIFT

(11) **EP 4 247 675 B1**
(45) Veröffentlichungstag und Bekanntmachung des Hinweises auf die Patenterteilung: **25.06.2025**
(21) Anmeldenummer: 21811032.8
(22) Anmeldetag: 15.11.2021
(51) Int. Cl.: B60T 8/88, B60W 50/04, B60T 17/22

(54) **VERFAHREN UND VORRICHTUNG ZUM ERMITTELN EINES TYPS EINER RECHENEINRICHTUNG EINES GERÄTS**
METHOD AND DEVICE FOR DETERMINING A TYPE OF COMPUTING DEVICE OF AN APPARATUS
PROCÉDÉ ET DISPOSITIF POUR DÉTERMINER UN TYPE DE DISPOSITIF INFORMATIQUE D'UN APPAREIL

(30) Priorität: 19.11.2020 DE 102020214599
(43) Veröffentlichungstag der Anmeldung: 27.09.2023
(73) Patentinhaber: Robert Bosch GmbH, 70442 Stuttgart (DE)
(72) Erfinder: HEIMBERGER, Thomas, 74239 Hardthausen (DE); WUNDERLICH, Fabian, 74523 Schwaebisch Hall (DE); MARQUART, Martin, 78564 Reichenbach (DE)
(86) Internationale Anmeldenummer: PCT/EP2021/081652
(87) Internationale Veröffentlichungsnummer: WO 2022/106345

(56) Entgegenhaltungen:
- EP-A2- 1 967 435
- WO-A1-03/086830
- WO-A1-2014/033172
- CN-B- 107 291 457

## Beschreibung

Die vorliegende Erfindung betrifft ein Verfahren zum Ermitteln eines Typs einer Recheneinrichtung eines Geräts eines Kraftfahrzeugs sowie eine entsprechende Vorrichtung. Bei dem Gerät handelt es sich etwa um ein elektromechanisches Gerät für das Kraftfahrzeug und insbesondere um ein Steuergerät, etwa einen elektromechanischen Bremskraftverstärker.

### Stand der Technik

Bremssysteme umfassen typischerweise elektromechanische Bremskraftverstärker sowie Fahrdynamikregelungs-Systeme (elektronisches Stabilitätsprogramm, ESP). Der Bremskraftverstärker dient dazu, die vom Fahrer aufzubringende Bremskraft zu verringern, welche benötigt wird, um die erforderliche Bremswirkung zu erzeugen. Die Bremskraftverstärker erzeugen die Bremswirkung hierbei durch Erzeugen einer Druckdifferenz, durch hydraulische oder durch elektrische Mechanismen. Ein beispielhafter Bremskraftverstärker ist aus der EP 2 379 377 B1 bekannt. Aus der EP 1 967 435 A2 ist ein Verfahren zur adaptiven Konfigurationserkennung nach einem Steuergerätehochlauf eines Kraftfahrzeugs bekannt.

Bremskraftverstärker können eine anwendungsspezifische integrierte Schaltung (englisch: application specific integrated circuit, ASIC) umfassen, welche Funktionen des Bremskraftverstärkers steuern. Für verschiedene Bremskraftverstärker können unterschiedliche ASICs zum Einsatz kommen. Diese können sich durch den bereitgestellten Funktionsumfang unterscheiden. So kann beispielsweise ein ASIC mit geringem Funktionsumfang keine hochautomatisierte Funktionen im elektromechanischem Bremskraftverstärker unterstützen, während dies für einen anderen Typ von ASIC der Fall ist.

Die bereitgestellten Informationen können über die Hardwarekonfiguration im elektromechanischen Bremskraftverstärker abgespeichert werden.

Weiter kann der elektromechanische Bremskraftverstärker basierend auf der Hardwarekonfiguration unterschiedliche Funktionen ausführen.

### Offenbarung der Erfindung

Die Erfindung stellt ein Verfahren und eine Vorrichtung zum Ermitteln eines Typs einer Recheneinrichtung eines Geräts eines Kraftfahrzeugs mit den Merkmalen der unabhängigen Patentansprüche bereit.

Bevorzugte Ausführungsformen sind Gegenstand der jeweiligen Unteransprüche.

Gemäß einem ersten Aspekt betrifft die Erfindung demnach ein Verfahren zum Ermitteln eines Typs einer Recheneinrichtung eines Geräts eines Kraftfahrzeugs. Die Recheneinrichtung ist dazu ausgebildet, zumindest eine Funktion des Geräts zumindest teilweise zu steuern. Auf mindestens ein Register einer Speichereinrichtung des Geräts wird zugegriffen. Anhand eines Ergebnisses des Zugriffs wird ein Typ der Recheneinrichtung ermittelt.

Gemäß einem zweiten Aspekt betrifft die Erfindung demnach eine Vorrichtung zum Ermitteln eines Typs einer Recheneinrichtung eines Geräts. Die Recheneinrichtung ist dazu ausgebildet, zumindest eine Funktion des Geräts zumindest teilweise zu steuern. Die Vorrichtung umfasst eine Schnittstelle, welche auf mindestens ein Register einer Speichereinrichtung des Geräts zugreifen kann. Weiter umfasst die Vorrichtung eine Ermittlungseinrichtung, welche den Typ des Geräts anhand eines Ergebnisses des Zugriffs ermittelt.

### Vorteile der Erfindung

Diese Erfindung ermöglicht die einfache Erkennung und Überprüfung der unterschiedlichen Typen bzw. Varianten von Recheneinrichtungen von Geräten eines Kraftfahrzeugs.

Unter einem "Typ" der Recheneinrichtung kann es sich im Rahmen dieser Erfindung beispielsweise um eine Hardwarevariante der Recheneinrichtung handeln.

Durch das Ermitteln des Typs der Recheneinrichtung kann eine mögliche fehlerhafte Differenz zwischen einem abgespeicherten Typ der Recheneinrichtung und dem Typ der tatsächlich verbauten Recheneinrichtung erkannt werden.

Das Ermitteln des Typs der Recheneinrichtung ist insbesondere für Mischplattformen vorteilhaft, wobei mehrere unterschiedliche Hardwarekonfigurationen mit derselben Applikationssoftware gesteuert werden können. Der Applikationssoftware kann der ermittelte Typ bereitgestellt werden, sodass die Applikationssoftware korrekt auf die Hardwarekonfiguration der Recheneinrichtung eingestellt werden kann.

Weiter kann ermöglicht werden, dass eine Softwarevariante unterschiedliche Typen bzw. Hardwarekonfigurationen der Recheneinrichtung unterstützt. Dadurch können Kosten in der Softwareentwicklung, Freigabe und beim Testen minimiert werden. Diese sind wiederum insbesondere für Mischplattformen mit unterschiedlichen Recheneinrichtungen besonders vorteilhaft.

Gründe für die Verwendung unterschiedlicher Typen von Recheneinrichtungen können Kostenersparnisse aufgrund veränderten Funktionsanforderungen oder die Entwicklungszyklen bei der Hardwareentwicklung umfassen. Veränderte Funktionsanforderungen können etwa die Bereitstellung oder Nichtbereitstellung von hochautomatisiertem Fahren (englisch: highly automated driving, HAD) betreffen.

Durch den definierten Zugriff auf Register einer Speichereinrichtung des Geräts kann eine frühzeitige Erkennung des tatsächlichen Typs der Recheneinrichtung bereits in einer Initialisierungsphase erfolgen.

Gemäß einer bevorzugten Weiterbildung des Verfahrens zum Ermitteln des Typs der Recheneinrichtung ist das Gerät ein Steuergerät im Kraftfahrzeug. Besonders bevorzugt ist das Steuergerät ein elektromechanischer Bremskraftverstärker.

Gemäß einer bevorzugten Weiterbildung des Verfahrens zum Ermitteln des Typs der Recheneinrichtung ist die Recheneinrichtung eine anwendungsspezifische integrierte Schaltung, ASIC. Basierend auf der detektierten ASIC-Hardware wird der ASIC entsprechend initialisiert. Des Weiteren können über den detektierten ASIC Funktionen ein- bzw. ausgeschaltet werden. So können zum Beispiel Funktionen für das autonome Fahren im elektromechanischen Bremskraftverstärker frühzeitig angepasst werden; eine fehlerhafte Steuerung im Bremssystem wird somit verhindert.

Gemäß einer bevorzugten Weiterbildung des Verfahrens zum Ermitteln des Typs der Recheneinrichtung ist die Speichereinrichtung eine Komponente der Recheneinrichtung selbst. Beispielsweise kann die Speichereinrichtung Teil des ASICs sein.

Gemäß einer bevorzugten Weiterbildung des Verfahrens zum Ermitteln des Typs der Recheneinrichtung umfasst der Zugriff auf das mindestens eine Register einen Lesezugriff, um eine Gerätekennung des Geräts auszulesen, wobei das Ermitteln des Typs der Recheneinrichtung unter Verwendung der Gerätekennung erfolgt.

Erfindungsgemäß umfasst der Zugriff auf das mindestens eine Register einen Lesezugriff auf mindestens ein vorgegebenes Register, wobei das Ermitteln des Typs der Recheneinrichtung unter Verwendung eines Vorliegens oder Nichtvorliegens eines Übertragungsfehlers erfolgt. Das Ergebnis des Zugriffs kann also mit erwarteten Ergebnissen verglichen werden, um den Typ der Recheneinrichtung zu ermitteln.

Gemäß einer bevorzugten Weiterbildung des Verfahrens zum Ermitteln des Typs der Recheneinrichtung umfasst jeder Typ von Recheneinrichtung ein spezifisches Register, wobei der Recheneinrichtung ein jeweiliger Typ zugeordnet wird, falls für das dem Typ zugeordnete spezifische Register kein Übertragungsfehler vorliegt. Beispielweise können mindestens zwei verschiedene Typen von Recheneinrichtungen herstellbar sein, wobei etwa ein erster Typ von Recheneinrichtung ein erstes Register aufweist, welches bzw. dessen Adresse jedoch für die weiteren Typen von Recheneinrichtungen nicht existiert. Entsprechend weisen Recheneinrichtungen von einem zweiten und gegebenenfalls weiteren Typ jeweils ein zweites bzw. gegebenenfalls jeweils weiteres Register auf, welches für die jeweils anderen Recheneinrichtungen nicht existiert. Falls nun versucht wird, Informationen aus einem dieser dedizierten bzw. spezifischen Register auszulesen, wird ein Übertragungsfehler vorliegen, sofern das Register nicht existiert. Falls kein Übertragungsfehler vorliegt, kann darauf geschlossen werden, dass es sich bei dem Typ der Recheneinrichtung um den dem Register zugeordneten Typ der Recheneinrichtung handelt. Entsprechend kann anhand der Antwort auf den Lesezugriff dadurch der Typ der Recheneinrichtung ermittelt werden.

Gemäß einer bevorzugten Weiterbildung des Verfahrens zum Ermitteln des Typs der Recheneinrichtung umfasst der Zugriff auf das mindestens eine Register einen Lesezugriff.

Gemäß einer bevorzugten Weiterbildung des Verfahrens zum Ermitteln des Typs der Recheneinrichtung kann anhand des ermittelten Typs der Recheneinrichtung bestätigt bzw. verifiziert werden, dass tatsächlich ein bereits vorab gespeicherter Typ der Recheneinrichtung vorliegt. Dadurch kann etwa verhindert werden, dass bei einer Reparatur eine Recheneinrichtung des falschen Typs (bzw. ein Gerät mit einer Recheneinrichtung des falschen Typs) verbaut wurde.

Gemäß einer bevorzugten Weiterbildung des Verfahrens zum Ermitteln des Typs der Recheneinrichtung wird der ermittelte Typ der Recheneinrichtung in einer Speichereinrichtung des Geräts gespeichert. Insbesondere kann der Typ der Recheneinrichtung auch in einer Speichereinrichtung der Recheneinrichtung selbst gespeichert werden.

Gemäß einer bevorzugten Weiterbildung des Verfahrens zum Ermitteln des Typs der Recheneinrichtung werden unter Verwendung des ermittelten Typs der Recheneinrichtung Softwarefunktionen der Recheneinrichtung angepasst und/oder geändert. Bei den Softwarefunktionen kann es sich etwa um eine Ventilansteuerung eines elektromechanischen Bremskraftverstärker handeln. Die Softwarefunktionen können auch die Unterstützung bzw. das Verhalten bezüglich autonomen Fahrens umfassen.

Gemäß einer bevorzugten Weiterbildung des Verfahrens zum Ermitteln des Typs der Recheneinrichtung wird das Ermitteln des Typs der Recheneinrichtung beim ersten Betrieb des Geräts durchgeführt und das Gerät wird anhand des ermittelten Typs der Recheneinrichtung des Geräts initialisiert.

Gemäß einer bevorzugten Weiterbildung des Verfahrens zum Ermitteln des Typs der Recheneinrichtung wird das Ermitteln des Typs der Recheneinrichtung beim Systemstart der Recheneinrichtung durchgeführt. Insbesondere kann das Verfahren jedes Mal durchgeführt werden, wenn die Recheneinrichtung bzw. das Gerät des Kraftfahrzeugs neu gestartet werden.

Gemäß einer bevorzugten Weiterbildung wird das Verfahrens zum Ermitteln des Typs der Recheneinrichtung während des Serienbetriebs durchgeführt.

Gemäß einer bevorzugten Weiterbildung des Verfahrens zum Ermitteln des Typs der Recheneinrichtung wird bei einer Erkennung von einer veränderten Hardwarekonfiguration im Serienbetrieb eine definierte Ersatzreaktion durchgeführt. Beispielweise kann eine Warnmeldung an den Fahrer des Fahrzeugs oder an eine Servicestelle ausgegeben werden. Falls etwa ein Gerät mit einer Recheneinrichtung vom falschen Typ verbaut wurde, kann dies erkannt werden und ein Einbaufehler gemeldet werden. Das Gerät kann dann durch ein Gerät mit einer Recheneinrichtung vom korrekten Typ ersetzt werden. Auch mögliche Angriffe Dritter können erkannt werden.

### Kurze Beschreibung der Zeichnungen

Es zeigen:
- Figur 1: ein schematisches Blockschaltbild einer Recheneinrichtung eines Geräts eines Kraftfahrzeugs sowie einer Vorrichtung zum Ermitteln eines Typs der Recheneinrichtung gemäß einer Ausführungsform der Erfindung;
- Figur 2: eine schematische Darstellung einer Speichereinrichtung mit Registern eines Geräts eines Kraftfahrzeugs; und
- Figur 3: ein Flussdiagramm eines Verfahrens zum Ermitteln eines Typs eine Recheneinrichtung eines Geräts eines Kraftfahrzeugs gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

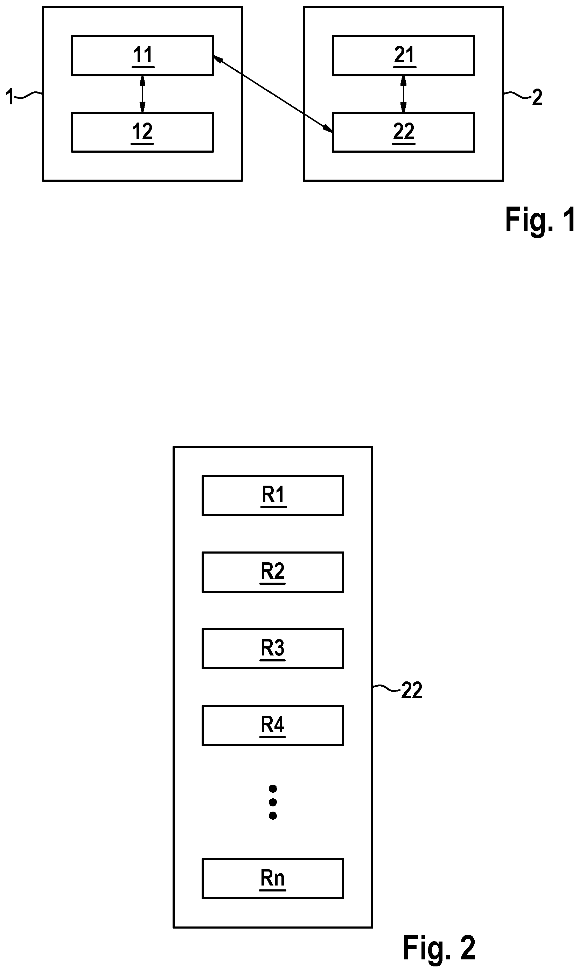

Figur 1 zeigt ein schematisches Blockschaltbild einer Vorrichtung 1 zum Ermitteln eines Typs einer Recheneinrichtung 21 eines Geräts 2 eines Kraftfahrzeugs. Im Folgenden wird die Erfindung genauer für einen elektromechanischen Bremskraftverstärker als Gerät 2 des Kraftfahrzeugs beschrieben. Die Erfindung ist jedoch nicht darauf beschränkt und für verschiedene, insbesondere elektromechanische Komponenten des Kraftfahrzeugs anwendbar, etwa Steuergeräte.

Die Recheneinrichtung 21 steuert Funktionen des elektromechanischen Bremskraftverstärkers, etwa das Aufbauen eines Bremsdrucks oder die Steuerung von Funktionen zum autonomen Fahren. Die Recheneinrichtung 21 kann eine anwendungsspezifische integrierte Schaltung, ASIC, sein oder umfassen.

Die Vorrichtung 1 kann ein elektronisches Steuergerät (englisch: electronic control unit, ECU) des Kraftfahrzeugs sein. Die Vorrichtung 1 kann auch eine spezielle Vorrichtung sein, welche nach der Montage des elektromechanischen Bremskraftverstärkers 2 zur Kontrolle des korrekten Einbaus mit dem elektromechanischen Bremskraftverstärker 2 gekoppelt wird.

Die Vorrichtung 1 umfasst eine Schnittstelle 11, um auf eine Speichereinrichtung 22 des elektromechanischen Bremskraftverstärkers 2 zuzugreifen. Die Speichereinrichtung 22 kann von der Recheneinrichtung 21 separiert sein, kann jedoch auch Teil der Recheneinrichtung 21 sein.

Die Speichereinrichtung 22 umfasst eine Vielzahl von Registern, wobei sich die Register für verschiedene Typen von Geräten 2 unterscheiden. Als "Register" können hierbei Speicherbereiche auf der Speichereinrichtung 22 verstanden werden, auf welche die Recheneinrichtung 21 zugreifen kann. Der Zugriff ist hierbei insbesondere vorzugsweise unabhängig vom Daten- oder Adressbus und kann dadurch sehr schnell erfolgen. Die Erfindung ist nicht auf eine bestimmte Anzahl oder Größe der Register beschränkt.

Die Recheneinrichtung 21 kann über einen Adressdecoder auf die Register der Speichereinrichtung 22 zugreifen. Für einen vorgegebenen Typ der Recheneinrichtung 21 können bestimmte Register existieren, welche für die anderen Typen der Recheneinrichtung 21 nicht existieren. Ein Ansteuern des Registers über die entsprechende Adresse führt dabei zu einem Übertragungsfehler.

Weiter umfasst die Vorrichtung 1 eine Ermittlungseinrichtung 12, welche den Typ der Recheneinrichtung 21 anhand eines Ergebnisses des Zugriffs ermittelt. Falls etwa ein bestimmtes Register angesteuert werden kann, welches lediglich für einen bestimmten Typ der Recheneinrichtung 21 existiert, kann die Ermittlungseinrichtung 12 ermitteln, dass es sich bei dem Typ der Recheneinrichtung 21 um genau diesen Typ der Recheneinrichtung 21 handelt.

Um den Typ der Recheneinrichtung 21 zu ermitteln, kann nacheinander ein jeweiliges spezifisches Register angesteuert werden, solange bis kein Übertragungsfehler mehr auftritt und der Typ der Recheneinrichtung 21 daher bestimmt werden kann. Die Reihenfolge der anzusteuernden Register kann hierbei fest vorgegeben sein.

Zusätzlich oder alternativ kann die Ermittlungseinrichtung 12 auch durch Auslesen eines weiteren Registers, welches eine Gerätekennung umfasst, den Typ der Recheneinrichtung 21 bestimmen.

Der Zugriff auf die Speichereinrichtung 22 über die Schnittstelle 11 kann direkt erfolgen. Es kann jedoch auch vorgesehen sein, dass der Zugriff auf die Speichereinrichtung 22 über die Schnittstelle 11 indirekt erfolgt. So kann die Schnittstelle 11 gemäß einer Ausführungsform mit einer Schnittstelle der Recheneinrichtung 22 verbunden sein und über die Schnittstelle die Recheneinrichtung 22 ansteuern, auf ein entsprechendes Register in der Speichereinrichtung 22 zuzugreifen. Dadurch ist ein direkter Zugriff der Vorrichtung 1 auf die Speichereinrichtung 22 nicht erforderlich.

Nach dem Ermitteln können Informationen über den Typ der Recheneinrichtung in der Speichereinrichtung 22 und/oder in einer (nicht gezeigten) Speichereinrichtung der Vorrichtung 1 gespeichert werden.

Weiter kann vorgesehen sein, dass die Ermittlungseinrichtung 12 die Recheneinrichtung 21 derart ansteuert, dass Funktionen der Recheneinrichtung 21 anhand des ermittelten Typs der Recheneinrichtung 21 angepasst und/oder geändert werden. So kann die Recheneinrichtung 21 zum autonomen Fahren konfiguriert werden, falls der Typ der Recheneinrichtung 21 dies zulässt.

Das Ermitteln des Typs der Recheneinrichtung 21 des Geräts 2 kann bei der erstmaligen Inbetriebnahme des Geräts 2 durchgeführt werden. Es kann auch vorgesehen sein, bei jedem Start des Kraftfahrzeugs das Ermitteln des Typs der Recheneinrichtung 21 durchzuführen.

Figur 2 zeigt eine schematische Darstellung der Speichereinrichtung 22 mit Registern R1 bis Rn des Geräts 2 des Kraftfahrzeugs.

In einem ersten Register R1 können Informationen über eine Gerätekennung des Geräts 2 bzw. der Recheneinrichtung 21 abgelegt sein. Weiter können Register R2 bis Rn vorgesehen sein. Beispielweise kann ein zweites Register R2 jedoch nur für den spezifischen Typ der Recheneinrichtung 21 vorhanden sein, während dieses Register bei Recheneinrichtungen 21 anderen Typs nicht ansteuerbar ist, sodass es zu einem Übertragungsfehler bzw. Zugriffsfehler kommt.

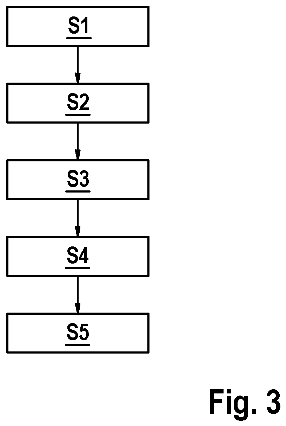

Figur 3 zeigt ein Flussdiagramm eines Verfahrens zum Ermitteln eines Typs einer Recheneinrichtung eines Geräts eines Kraftfahrzeugs, und insbesondere eines oben beschriebenen Geräts 2.

In einem ersten Verfahrensschritt S1 wird das Gerät 2 zum ersten Mal in Betrieb genommen.

In einem zweiten Verfahrensschritt S2 greift eine Ermittlungseinrichtung 12 über eine Schnittstelle 11 auf mindestens ein Register R1 bis Rn einer Speichereinrichtung 22 des Geräts 2 zu. Bei dem Zugriff kann es sich um einen Lesezugriff handeln, etwa um eine Gerätekennung des Geräts 2 aus einem Register R1 bis Rn der Speichereinrichtung 22 auszulesen. Zusätzlich oder alternativ kann es sich bei dem Zugang um einen Lesezugriff auf mindestens ein Register R1 bis Rn handeln. Dabei kann jeder Typ von Recheneinrichtung 21 ein spezifisches Register umfassen, welches für andere Recheneinrichtungen 21 nicht vorliegt bzw. auf welches nicht zugegriffen werden kann.

In einem dritten Verfahrensschritt S3 wird anhand eines Ergebnisses des Zugriffs der Typ der Recheneinrichtung 21 ermittelt. Etwa kann der Typ der Recheneinrichtung 21 anhand der ausgelesenen Gerätekennung ermittelt werden. Zusätzlich oder alternativ kann der Typ der Recheneinrichtung 21 anhand eines Vorliegens oder Nichtvorliegens eines Übertragungsfehlers beim Lesezugriff auf das mindestens eine Register R1 bis Rn ermittelt werden.

In einem Verfahrensschritt S4 wird optional der ermittelte Typ der Recheneinrichtung 21 in der Speichereinrichtung 22 des Geräts gespeichert.

In einem Verfahrensschritt S5 kann weiter optional anhand des ermittelten Typs der Recheneinrichtung 21 mindestens eine Softwarefunktion der Recheneinrichtung 21 angepasst und/oder geändert werden.

## Patentansprüche

1. Verfahren zum Ermitteln eines Typs einer Recheneinrichtung (21) eines Geräts (2) eines Kraftfahrzeugs, wobei die Recheneinrichtung (21) dazu ausgebildet ist, zumindest eine Funktion des Geräts (2) zumindest teilweise zu steuern; mit den Schritten:
Zugreifen (S2) auf mindestens ein Register (R1-Rn) einer Speichereinrichtung (22) des Geräts (2); und
Ermitteln (S3) des Typs der Recheneinrichtung (21) anhand eines Ergebnisses des Zugriffs;
**dadurch gekennzeichnet, dass** der Zugriff auf das mindestens eine Register (R1-Rn) einen Lesezugriff auf mindestens ein vorgegebenes Register (R1-Rn) umfasst, und das Ermitteln des Typs der Recheneinrichtung (21) unter Verwendung eines Vorliegens oder Nichtvorliegens eines Übertragungsfehlers erfolgt.

2. Verfahren nach Anspruch 1, wobei das Gerät (2) ein elektromechanischer Bremskraftverstärker ist.

3. Verfahren nach Anspruch 1 oder 2, wobei die Recheneinrichtung (21) eine anwendungsspezifische integrierte Schaltung, ASIC, ist.

4. Verfahren nach einem der vorangehenden Ansprüche, wobei der Zugriff auf das mindestens eine Register (R1-Rn) einen Lesezugriff umfasst, um eine Gerätekennung des Geräts (2) auszulesen, und wobei das Ermitteln des Typs der Recheneinrichtung (21) unter Verwendung der Gerätekennung erfolgt.

5. Verfahren nach einem der vorangehenden Ansprüche, wobei jeder Typ von Recheneinrichtung (21) ein spezifisches Register (R1-Rn) umfasst, und wobei der Recheneinrichtung (21) ein jeweiliger Typ zugeordnet wird, falls für das dem Typ zugeordnete spezifische Register (R1-Rn) kein Übertragungsfehler vorliegt.

6. Verfahren nach einem der vorangehenden Ansprüche, wobei der ermittelte Typ der Recheneinrichtung (21) in einer Speichereinrichtung (22) des Geräts (2) gespeichert wird (S4).

7. Verfahren nach einem der vorangehenden Ansprüche, wobei unter Verwendung des ermittelten Typs der Recheneinrichtung (21) Softwarefunktionen der Recheneinrichtung (21) angepasst und/oder geändert werden (S5).

8. Verfahren nach einem der vorangehenden Ansprüche, wobei das Ermitteln des Typs der Recheneinrichtung (21) des Geräts (2) beim ersten Betrieb (S1) des Geräts (2) durchgeführt wird und das Gerät (2) anhand des ermittelten Typs der Recheneinrichtung (21) initialisiert wird.

9. Vorrichtung (1) zum Ermitteln eines Typs einer Recheneinrichtung (21) eines Geräts (2), wobei die Recheneinrichtung (21) dazu ausgebildet ist, zumindest eine Funktion des Geräts (2) zumindest teilweise zu steuern; mit
einer Schnittstelle (11), welche dazu ausgebildet ist auf mindestens ein Register (R1-Rn) einer Speichereinrichtung (22) des Geräts (2) zuzugreifen; und
einer Ermittlungseinrichtung (12), welche dazu ausgebildet ist, den Typ der Recheneinrichtung (21) anhand eines Ergebnisses des Zugriffs zu ermitteln;
**dadurch gekennzeichnet, dass** der Zugriff auf das mindestens eine Register (R1-Rn) einen Lesezugriff auf mindestens ein vorgegebenes Register (R1-Rn) umfasst, und dass die Ermittlungseinrichtung (12) dazu ausgebildet ist, den Typ der Recheneinrichtung (21) unter Verwendung eines Vorliegens oder Nichtvorliegens eines Übertragungsfehlers zu ermitteln.

## Claims

1. Method for determining a type of computing device (21) of a unit (2) of a motor vehicle, wherein the computing device (21) is designed to at least partially control at least one function of the unit (2); comprising the following steps:
accessing (S2) at least one register (R1-Rn) of a memory device (22) of the unit (2); and
determining (S3) the type of computing device (21) based on a result of the access process;
**characterized in that** the accessing of the at least one register (R1-Rn) comprises read accessing of at least one predefined register (R1-Rn), and the type of computing device (21) is determined using a presence or absence of a transmission error.

2. Method according to Claim 1, wherein the unit (2) is an electromechanical brake booster.

3. Method according to Claim 1 or 2, wherein the computing device (21) is an application-specific integrated circuit, ASIC.

4. Method according to any one of the preceding claims, wherein the accessing of the at least one register (R1-Rn) comprises read access in order to read out a unit identifier of the unit (2), and wherein the type of computing device (21) is determined using the unit identifier.

5. Method according to any one of the preceding claims, wherein each type of computing device (21) comprises a specific register (R1-Rn), and wherein the computing device (21) is assigned a respective type if no transmission error is present for the specific register (R1-Rn) assigned to the type.

6. Method according to any one of the preceding claims, wherein the determined type of computing device (21) is stored (S4) in a memory device (22) of the unit (2).

7. Method according to any one of the preceding claims, wherein software functions of the computing device (21) are adapted and/or modified (S5) using the determined type of computing device (21).

8. Method according to any one of the preceding claims, wherein the type of computing device (21) of the unit (2) is determined when the unit (2) is operated for the first time (S1) and the unit (2) is initialized based on the determined type of computing device (21).

9. Apparatus (1) for determining a type of computing device (21) of a unit (2), wherein the computing device (21) is designed to at least partially control at least one function of the unit (2); comprising the following
an interface (11) designed to access at least one register (R1-Rn) of a memory device (22) of the unit (2); and
a determination device (12) designed to determine the type of computing device (21) based on a result of the access process;
**characterized in that** the accessing of the at least one register (R1-Rn) comprises read accessing of at least one predefined register (R1-Rn), and **in that** the determination device (12) is designed to determine the type of computing device (21) using a presence or absence of a transmission error.

## Revendications

1. Procédé de détermination d'un type d'un dispositif informatique (21) d'un appareil (2) d'un véhicule automobile, le dispositif informatique (21) étant conçu pour commander au moins partiellement au moins une fonction de l'appareil (2) ; comprenant les étapes suivantes :
accès (S2) à au moins un registre (R1-Rn) d'un dispositif de stockage (22) de l'appareil (2) ; et
détermination (S3) du type du dispositif informatique (21) sur la base d'un résultat de l'accès ;
**caractérisé en ce que** l'accès à l'au moins un registre (R1-Rn) comprend un accès en lecture à au moins un registre prédéfini (R1-Rn), et la détermination du type du dispositif informatique (21) s'effectue en utilisant la présence ou l'absence d'une erreur de transmission.

2. Procédé selon la revendication 1, dans lequel l'appareil (2) est un servofrein électromécanique.

3. Procédé selon la revendication 1 ou 2, dans lequel le dispositif informatique (21) est un circuit intégré spécifique d'application, ASIC.

4. Procédé selon l'une quelconque des revendications précédentes, dans lequel l'accès à l'au moins un registre (R1-Rn) comprend un accès en lecture pour lire un identifiant d'appareil de l'appareil (2), et dans lequel la détermination du type du dispositif informatique (21) s'effectue en utilisant l'identifiant d'appareil.

5. Procédé selon l'une quelconque des revendications précédentes, dans lequel chaque type de dispositif informatique (21) comprend un registre spécifique (R1-Rn), et dans lequel un type respectif est attribué au dispositif informatique (21) si aucune erreur de transmission n'est présente pour le registre spécifique (R1-Rn) attribué au type.

6. Procédé selon l'une quelconque des revendications précédentes, dans lequel le type du dispositif informatique (21) déterminé est stocké (S4) dans un dispositif de stockage (22) de l'appareil (2).

7. Procédé selon l'une quelconque des revendications précédentes, dans lequel des fonctions logicielles du dispositif informatique (21) sont adaptées et/ou modifiées (S5) en utilisant le type déterminé du dispositif informatique (21).

8. Procédé selon l'une quelconque des revendications précédentes, dans lequel la détermination du type du dispositif informatique (21) de l'appareil (2) est effectuée lors de la première mise en service (S1) de l'appareil (2), et l'appareil (2) est initialisé sur la base du type déterminé du dispositif informatique (21).

9. Dispositif (1) de détermination d'un type d'un dispositif informatique (21) d'un appareil (2), le dispositif informatique (21) étant conçu pour commander au moins partiellement au moins une fonction de l'appareil (2) ; comprenant
une interface (11) qui est conçue pour accéder à au moins un registre (R1-Rn) d'un dispositif de stockage (22) de l'appareil (2) ; et
un dispositif de détermination (12) qui est conçu pour déterminer le type du dispositif informatique (21) sur la base d'un résultat de l'accès ;
**caractérisé en ce que** l'accès à l'au moins un registre (R1-Rn) comprend un accès en lecture à au moins un registre prédéfini (R1-Rn), et **en ce que** le dispositif de détermination (12) est conçu pour déterminer le type du dispositif informatique (21) en utilisant la présence ou l'absence d'une erreur de transmission.
